# EUROPEAN PATENT APPLICATION

(11) **EP 3 971 761 A1**
(43) Date of publication of application: **23.03.2022**
(21) Application number: 21170145.3
(22) Date of filing: 23.04.2021
(51) Int. Cl.: G06F 40/40, G06F 40/151, G06F 16/34

(54) **METHOD AND APPARATUS FOR GENERATING SUMMARY, ELECTRONIC DEVICE AND STORAGE MEDIUM THEREOF**

(30) Priority: 21.09.2020 CN 202010993704
(71) Applicant: Beijing Baidu Netcom Science and Technology Co., Ltd., Beijing 100085 (CN)
(72) Inventor: WU, Wenhao, Beijing, Beijing 100085 (CN); LI, Wei, Beijing, Beijing 100085 (CN); XIAO, Xinyan, Beijing, Beijing 100085 (CN)
(74) Representative: dompatent von Kreisler Selting Werner - Partnerschaft von Patent- und Rechtsanwälten mbB

(57) **Abstract**

The present disclosure discloses a method and apparatus for generating a summary, an electronic device and a storage medium, and relates to the natural language processing field, the deep learning field and the knowledge graph field. The method may include: acquiring a knowledge graph corresponding to a text to be processed, nodes in the knowledge graph represent semantic concepts in the text to be processed, and sides in the knowledge graph represent semantic relationships among the semantic concepts; encoding the text to be processed at a token level to obtain a context encoded representation of each token; determining an initial representation of each node in the knowledge graph according to the context encoded representation of each token; performing an encoding operation according to the initial representation of each node and the connection relationships among the nodes to obtain a node representation of each node; and performing a decoding operation according to the node representation of each node to obtain the summary of the text to be processed. With the solution of the present disclosure, the semantic coherence and the accuracy of the generated summary may be improved.

## Description

### TECHNICAL FIELD

The present disclosure relates to a computer application technology, particularly to the natural language processing field, the deep learning field and the knowledge graph field, and more particularly to a method and apparatus for generating a summary, an electronic device and a storage medium.

### BACKGROUND

An automatic summarization technology means that a summary is automatically generated for one or more subject-related texts (documents). In today's information explosion, the automatic summarization technology may provide a reader with concise and important summary information, thereby greatly saving the reading time of the reader to improve information acquisition efficiency.

Currently, common automatic summarization methods include an extractive method and an abstractive method. The extractive method means that a plurality of important sentences are extracted from a text to be combined into a summary. Usually, an end-to-end abstractive architecture is adopted in the abstractive method, text information is first mapped to a high-dimensional vector with a decoder, and then, a decoding operation is performed from the high-dimensional vector with the decoder to generate a summary.

However, the sentences extracted with the extractive method often lack semantic coherence and have poor accuracy. In addition, in the abstractive method, the semantics in the text is not really understood like human beings, and the generated summary also has poor accuracy.

### SUMMARY

In view of this, the present disclosure provides a method and apparatus for generating a summary, an electronic device and a storage medium thereof.

A method for generating a summary includes:
acquiring a knowledge graph corresponding to a text to be processed, wherein nodes in the knowledge graph represent semantic concepts in the text to be processed, and sides in the knowledge graph represent semantic relationships among the semantic concepts;
encoding the text to be processed at a token level to obtain a context encoded representation of each token;
determining an initial representation of each node in the knowledge graph according to the context encoded representation of each token;
performing an encoding operation according to the initial representation of each node and the connection relationships among the nodes to obtain a node representation of each node; and
performing a decoding operation according to the node representation of each node to obtain the summary of the text to be processed.

An apparatus for generating a summary includes:
a graph parsing module configured to acquire a knowledge graph corresponding to a text to be processed, wherein nodes in the knowledge graph represent semantic concepts in the text to be processed, and sides in the knowledge graph represent semantic relationships among the semantic concepts;
a token encoding module configured to encode the text to be processed at a token level to obtain a context encoded representation of each token;
a merging module configured to determine an initial representation of each node in the knowledge graph according to the context encoded representation of each token;
a graph encoding module configured to perform an encoding operation according to the initial representation of each node and the connection relationships among the nodes to obtain a node representation of each node; and
a graph decoding module configured to perform a decoding operation according to the node representation of each node to obtain the summary of the text to be processed.

An electronic device includes:
at least one processor; and
a memory connected with the at least one processor communicatively;
wherein the memory stores instructions executable by the at least one processor to enable the at least one processor to perform the method as mentioned above.

There is provided a non-transitory computer readable storage medium with computer instructions stored thereon, wherein the computer instructions are used for causing a computer to perform the method as mentioned above.

There is provided a computer program product includes instructions which, when the program is executed by a computer, cause the computer to carry out the method as mentioned above.

One embodiment in the above-mentioned application has the following advantages or beneficial effects. Based on an end-to-end abstractive architecture, text information is converted into knowledge-graph structure information, and on the basis of considering token level encoding of context information, the semantic concepts and the semantic relationships among the semantic concepts in the text are modeled explicitly, thereby understanding and screening important information in the text more clearly and accurately, and then improving the semantic coherence and the accuracy of the generated summary.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings:
Fig. 1 is a flow chart of a method for generating a summary according to an embodiment of the present disclosure;
Fig. 2 is a schematic diagram of a knowledge graph according to an embodiment of the present disclosure;
Fig. 3 is a schematic diagram of an overall implementation process of the method for generating a summary according to an embodiment of the present disclosure;
Fig. 4 is a schematic structural diagram of an apparatus 40 for generating a summary according to an embodiment of the present disclosure; and
Fig. 5 is a block diagram of an electronic device for the method according to an embodiment of the present disclosure.

### DETAILED DESCRIPTION OF EMBODIMENTS

The following part will illustrate exemplary embodiments of the present disclosure with reference to the figures, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

In addition, it should be understood that the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

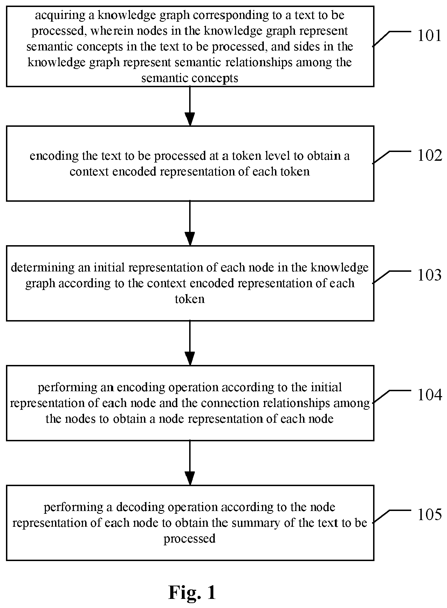

Fig. 1 is a flow chart of a method for generating a summary according to an embodiment of the present disclosure. As shown in Fig. 1, the method includes the following implementation steps:
101: acquiring a knowledge graph corresponding to a text to be processed, wherein nodes in the knowledge graph represent semantic concepts in the text to be processed, and sides in the knowledge graph represent semantic relationships among the semantic concepts;
102: encoding the text to be processed at a token level to obtain a context encoded representation of each token;
103: determining an initial representation of each node in the knowledge graph according to the context encoded representation of each token;
104: performing an encoding operation according to the initial representation of each node and the connection relationships among the nodes to obtain a node representation of each node; and
105: performing a decoding operation according to the node representation of each node to obtain the summary of the text to be processed.

In the above-mentioned embodiment, based on an end-to-end abstractive architecture, text information is converted into knowledge-graph structure information, and on the basis of considering token level encoding of context information, the semantic concepts and the semantic relationships among the semantic concepts in the text are modeled explicitly, thereby understanding and screening important information in the text more clearly and accurately, and then improving the semantic coherence and the accuracy of the generated summary.

The text to be processed includes N texts, and N is a positive integer having a specific value determined according to actual requirements. That is, the text to be processed may include only one text or a plurality of texts, in the case that there are a plurality of texts, the texts usually have related subjects.

As described in the step 101, the knowledge graph corresponding to the text to be processed may be acquired, the nodes in the knowledge graph represent the semantic concepts in the text to be processed, and the sides in the knowledge graph represent the semantic relationships among the semantic concepts.

The semantic concepts and the semantic relationships among the semantic concepts in the text play an important role in the text understanding process, information selection during generation of the summary. The knowledge graph corresponding to the text to be processed may be obtained by a text analysis tool, such as a graph parser; that is, a text structure is converted into a graph representation with a semantic structure. The small and complete semantic concepts in the text are effectively extracted as the nodes of the knowledge graph converted based on syntactic analysis, and the semantic relationships among the semantic concepts are represented by the sides. The semantic concepts may also be understood as the smallest semantic units which may be obtained by partition.

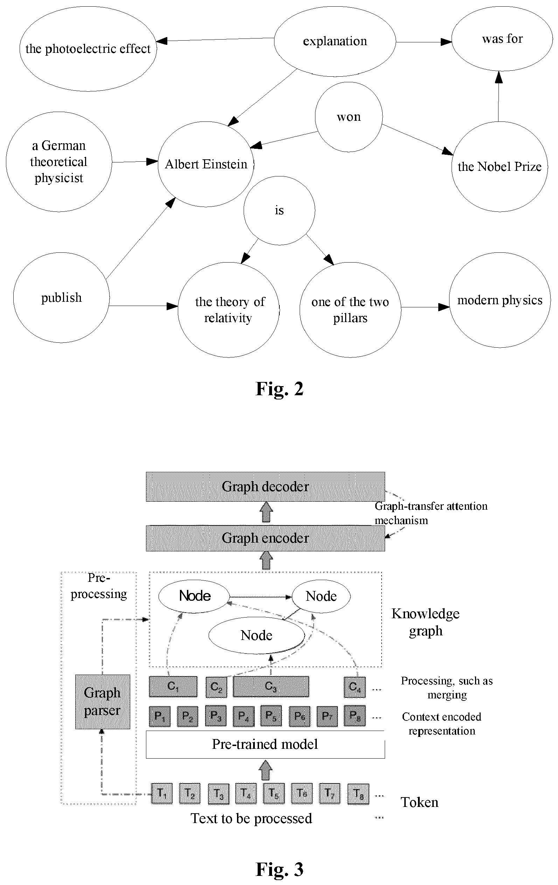

Fig. 2 is a schematic diagram of the knowledge graph according to an embodiment of the present disclosure. As shown in Fig. 2, assuming that the number of the text to be processed is one, and the text includes the following content: Albert Einstein, a German theoretical physicist, published the theory of relativity; he won the Nobel Prize; the theory of relativity is one of the two pillars of modern physics; and the great Prize was for his explanation of the photoelectric effect, the knowledge graph as shown in Fig. 2 may be obtained for this text. By merging the semantic concepts in different sentences, long dependency relationships which are difficult to model across sentence relationships by a neural network model are provided in the knowledge graph while the semantic relationships are introduced.

As described in the step 102, the text to be processed may also be encoded at the token level, so as to obtain the context encoded representation (vector representation) of each token. Specifically, the text to be processed may be encoded at the token level by a pre-trained module, so as to obtain the context encoded representation of each token in the text to be processed. Semantics related to text contexts may be reserved by encoding the text to be processed at the token level.

As described in the step 103, after the context encoded representation of each token is obtained, the initial representation (vector representation) of each node in the knowledge graph may also be determined according to the context encoded representation of each token.

If two or more tokens to be merged are acquired corresponding to a node (any node), the initial representation of this node may be determined according to the context encoded representations of the two or more tokens to be merged; if only one node is acquired corresponding to a node, the context encoded representation of the semantic concept corresponding to the node may be taken as the initial representation of the node, and the semantic concept corresponding to the node is the one token.

Specifically, for a node having one token as its corresponding semantic concept, in response to determining that the token appears at at least two different positions in the text to be processed, the same tokens appearing at the different positions may all be used as the tokens to be merged corresponding to this node, and in response to determining that there is an another token having a different expression manner from but a same semantic as the token, the another token and the same tokens may all be used as the tokens to be merged corresponding to the node.

When appearing at different positions in the text to be processed, the same token may have different context encoded representations. For example, a certain node *a* has a corresponding semantic concept which is token *a* appearing at three different positions in the text to be processed, and then, the tokens *a* appearing at the three different positions may all be used as the tokens to be merged corresponding to the node *a.*

For another example, a certain node *a* has a corresponding semantic concept which is token *a,* token *b* has a different expression manner from but a same semantics as the token *a,* that is, both have the same semantics, and then, both tokens *b* and *a* may be used as the tokens to be merged corresponding to the node *a.*

In addition, for a node with one phrase as the corresponding semantic concept, tokens forming the phrase and appearing at various positions in the text to be processed may be used as the tokens to be merged corresponding to this node, and in response to determining that there is another token having a different expression manner from but a same semantic as the semantic concept corresponding to the node, the another token may also be used as a token to be merged corresponding to the node.

Taking the node "Albert Einstein" shown in Fig. 2 as an example, the corresponding semantic concept is a phrase composed of two tokens: "Albert" and "Einstein", and then, both the tokens may be used as the tokens to be merged corresponding to this node; assuming that each of the two tokens appears at two different positions in the text to be processed, both the tokens appearing at the different positions may all be used as the tokens to be merged corresponding to the node; in addition, as shown in Fig. 2, the tokens "he" and "his" are expressed differently from "Albert Einstein", but have the semantics "Albert Einstein", and then, "he" and "his" may also be used as the tokens to be merged corresponding to the node.

In response to determining that there is another token having a different expression manner from but a same semantic as the semantic concept corresponding to a node in the knowledge graph, this node may be referred to as a co-reference node, such as the nodes "Albert Einstein" and "the Nobel Prize" shown in Fig. 2, and the node "the great Prize" is expressed differently from the node "the Nobel Prize" but has the semantics of "the Nobel Prize".

The above way to determine the token to be merged is merely an example, and is not intended to limit the technical solution of the present disclosure, and specific implementations may be determined according to actual requirements.

The initial representation of a/any node may be determined according to the context encoded representation of the token to be merged corresponding to this node. For example, the sum of the context encoded representations of the tokens to be merged corresponding to this node may be calculated, and the quotient of the sum over the number of the tokens to be merged (the sum divided by the number of the tokens to be merged) corresponding to the node may be calculated as the initial representation of the node.

Assuming that the text to be processed is the aforesaid "Albert Einstein, a German theoretical physicist, published the theory of relativity; he won the Nobel Prize; the theory of relativity is one of the two pillars of modern physics; and the great Prize was for his explanation of the photoelectric effect", the corresponding knowledge graph is shown in Fig. 2. Taking the node "Albert Einstein" as an example, this node is composed of the two tokens "Albert" and "Einstein", and the two tokens each only appears at one position in the text to be processed and are used as the tokens to be merged of this node; in addition, the tokens "he" and "his" are expressed differently from "Albert Einstein", but have the semantics of "Albert Einstein", and may also be used as the tokens to be merged corresponding to the node, such that four tokens to be merged may be obtained in total, the context encoded representations of the four tokens to be merged may be added, the sum is divided by 4, and the obtained quotient may be used as the initial representation of the node "Albert Einstein".

With the above-mentioned processing operation, the initial representation of each node in the knowledge graph may be acquired accurately, thereby laying a good foundation for subsequent processing operations.

As described in the step 104, the encoding operation may also be performed according to the initial representation of each node and the connection relationships among the nodes to obtain the node representation (vector representation) of each node; that is, the knowledge graph may be encoded at a node level by a graph encoder, so as to obtain the node representation considering the structure of the knowledge graph.

A traditional graph encoder based on a graph neural network tends to be unable to model a multi-hop relationship well, but the multi-hop relationship is quite important in practical applications. Specifically, in the present disclosure, after the text to be processed is converted into the knowledge graph, subjects and objects in sentences tend to have second-order neighbor relationships, and the relationships between the subjects and the objects tend to be more important than relationships between the subjects and predicates and between the predicates and the objects.

Therefore, in an embodiment of the present disclosure, it is proposed that a shortcut side between a node and the second-order neighbor node of this node may be added in the knowledge graph, and the second-order neighbor node of this node is connected to this node through another node. Taking the node "Albert Einstein" shown in Fig. 2 as an example, the node "the Nobel Prize", for example, serve as a second-order neighbor node of the node "Albert Einstein" and may be directly connected with the node "Albert Einstein" through sides. Further, the encoding operation may be performed according to the initial representation of each node and the connection relationships among the nodes after the addition of the shortcut side, so as to obtain the node representation of each node.

In the above-mentioned processing way, the addition of the shortcut side from the node to the second-order neighbor node thereof enhances the modeling operation of the multi-hop relationship in the graph by the graph encoder, thereby improving the accuracy of the acquired node representation.

As described in the step 105, the decoding operation may also be performed according to the node representation of each node, so as to obtain the summary of the text to be processed; that is, the decoding operation may be performed by a graph decoder according to the node representation of each node in the knowledge graph, so as to obtain the final required summary of the text to be processed.

In an example, the decoding operation may be performed according to the node representation of each node based on the graph-transfer attention mechanism, so as to obtain the summary of the text to be processed. In the conventional attention mechanism, encoding information tends to be serialized linearly without considering the structure of the graph; in an embodiment of the present disclosure, it is proposed that the graph-transfer attention mechanism may be used; that is, the importance degree of each node is linearly predicted like the conventional attention mechanism, and then propagated in the graph, so as to obtain attention considering the structure of the graph, and then improve the accuracy of a decoding result.

In addition, compared with existing methods, by performing the encoding and decoding operations with the knowledge graph, the input long text may be processed more effectively and accurately by means of the above-mentioned graph-transfer attention mechanism.

Based on the above-mentioned description, Fig. 3 is a schematic diagram of an overall implementation process of the method for generating a summary according to an embodiment of the present disclosure. As shown in Fig. 3, in a pre-processing stage, a parsing operation may be performed by the graph parser to obtain the knowledge graph corresponding to the text to be processed, and the text to be processed may be encoded at the token level by a pre-trained model, so as to obtain the context encoded representation of each token in the text to be processed; then, the initial representation of each node in the knowledge graph may be determined with processing operations, such as merging, according to the obtained context encoded representation of each token; then, the encoding operation may be performed according to the initial representation of each node and the connection relationships among the nodes, so as to obtain the node representation of each node; further, the decoding operation may be performed according to the node representation of each node, so as to obtain the summary of the text to be processed, and the graph-transfer attention mechanism, for example, may be used in the decoding process.

The way to acquire the knowledge graph corresponding to the text to be processed, the way to obtain the context encoded representation of each token, the way to perform the encoding and decoding operations, belong to the prior art, and for other specific implementations, reference is made to the foregoing related description, and will not be detailed herein.

In addition, it is to be noted that for simplicity of description, the above-mentioned embodiment of the method is described as combinations of a series of acts, but those skilled in the art should understand that the present disclosure is not limited by the described order of acts, as some steps may be performed in other orders or simultaneously according to the present disclosure. Further, those skilled in the art should also understand that the embodiments described in this specification are exemplary embodiments and that acts and modules referred to are not necessary for the present disclosure.

The above is a description of an embodiment of the method, and an apparatus according to an embodiment of the present disclosure will be further described below.

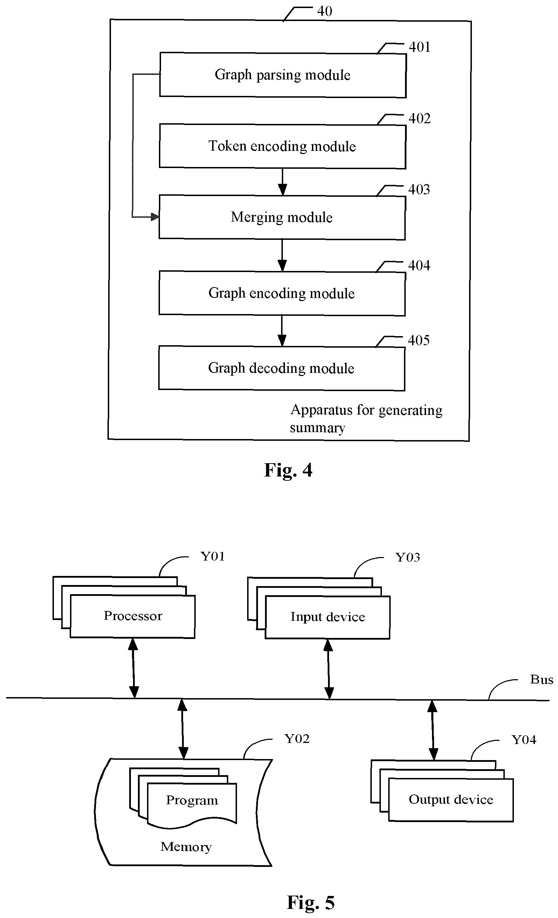

Fig. 4 is a schematic structural diagram of an apparatus 40 for generating a summary according to an embodiment of the present disclosure. As shown in Fig. 4, the apparatus includes:
a graph parsing module 401 configured to acquire a knowledge graph corresponding to a text to be processed, wherein nodes in the knowledge graph represent semantic concepts in the text to be processed, and sides in the knowledge graph represent semantic relationships among the semantic concepts;
a token encoding module 402 configured to encode the text to be processed at a token level to obtain a context encoded representation of each token;
a merging module 403 configured to determine an initial representation of each node in the knowledge graph according to the context encoded representation of each token;
a graph encoding module 404 configured to perform an encoding operation according to the initial representation of each node and the connection relationships among the nodes to obtain a node representation of each node; and
a graph decoding module 405 configured to perform a decoding operation according to the node representation of each node to obtain the summary of the text to be processed.

The text to be processed includes N texts, and N is a positive integer. That is, the number of the text to be processed may be one or more, and if the number is more, the plural texts usually have related subjects.

The graph parsing module 401 may obtain the knowledge graph corresponding to the text to be processed by a text analysis tool, such as a graph parser, that is, convert a text structure into a graph representation with a semantic structure.

The token encoding module 402 may further encode the text to be processed at the token level using a pre-trained model, so as to obtain the context encoded representation of each token.

After the context encoded representation of each token is obtained, the merging module 403 may further determine the initial representation of each node in the knowledge graph according to the context encoded representation of each token.

If two or more tokens to be merged are acquired corresponding to a node, the merging module 403 may determine the initial representation of this node according to the context encoded representations of the two or more tokens to be merged; if only one token is acquired corresponding to a node, the merging module 403 may take the context encoded representation of the semantic concept corresponding to the node as the initial representation of the node, and the semantic concept corresponding to the node is the one token.

Specifically, for a node with one token as the corresponding semantic concept, in response to determining that the token appears at at least two different positions in the text to be processed, the merging module 403 may take the same tokens appearing at the different positions as the tokens to be merged corresponding to this node, and in response to determining that there is an another token having a different expression manner from and a same semantics as the token, the merging module 403 may take the another token as a token to be merged corresponding to the node.

In addition, for a/any node having one phrase as its corresponding semantic concept, the merging module 403 may take the tokens forming the phrase and appearing at various positions in the text to be processed as the tokens to be merged corresponding to this node, and in response to determining that there is an another token having a different expression manner from but a same semantic as the semantic concept corresponding to the node, the merging module 403 may take as well the another token as a token to be merged corresponding to the node.

The merging module 403 may calculate the sum of the context encoded representations of the tokens to be merged corresponding to a/any node, and obtain the quotient by dividing the sum by a number of the tokens to be merged corresponding to the node, and taking the quotient as the initial representation of the node.

Further, the graph encoding module 404 may perform the encoding operation according to the initial representation of each node and the connection relationships among the nodes to obtain the node representation of each node. Preferably, the graph encoding module 404 may further add a shortcut side between a node and a second-order neighbor node of this node in the knowledge graph, here, the second-order neighbor node of the node is connected to the node through another node; and the graph encoding module 404 may perform the encoding operation according to the initial representation of each node and the connection relationships among the nodes after the addition of the shortcut side, so as to obtain the node representation of each node.

The graph decoding module 405 may perform the decoding operation according to the node representation of each node to obtain the summary of the text to be processed. Preferably, the graph decoding module 405 may perform the decoding operation according to the node representation of each node based on the graph-transfer attention mechanism, so as to obtain the summary of the text to be processed.

For the specific work flow of the embodiment of the apparatus shown in Fig. 4, reference is made to the related description in the foregoing embodiment of the method, and details are not repeated.

In conclusion, with the technical solution of the apparatus according to the embodiment of the present disclosure, based on an end-to-end abstractive architecture, text information is converted into knowledge-graph structure information, and on the basis of considering token level encoding of context information, the semantic concepts and the semantic relationships among the semantic concepts in the text are modeled explicitly, thereby understanding and screening important information in the text more clearly and accurately, and then improving the semantic coherence and the accuracy of the generated summary.

According to an embodiment of the present disclosure, there are also provided an electronic device, a readable storage medium and a computer program product.

Fig. 5 is a block diagram of an electronic device for the method according to an embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present disclosure described and/or claimed herein.

As shown in Fig. 5, the electronic device includes one or more processors Y01, a memory Y02, and interfaces configured to connect the various components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a graphical user interface at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 5, one processor Y01 is taken as an example.

The memory Y02 is configured as the non-transitory computer readable storage medium according to the present disclosure. The memory stores instructions which are executable by the at least one processor to cause the at least one processor to perform a method according to the present disclosure. The non-transitory computer readable storage medium according to the present disclosure stores computer instructions for causing a computer to perform the method according to the present disclosure.

The memory Y02 which is a non-transitory computer readable storage medium may be configured to store non-transitory software programs, non-transitory computer executable programs and modules, such as program instructions/modules corresponding to the method according to the embodiments of the present disclosure. The processor Y01 executes various functional applications and data processing of a server, that is, implements the method according to the above-mentioned embodiments, by running the non-transitory software programs, instructions, and modules stored in the memory Y02.

The memory Y02 may include a program storage area and a data storage area, wherein the program storage area may store an operating system and an application program required for at least one function; the data storage area may store data created according to use of the electronic device, for example. Furthermore, the memory Y02 may include a high-speed random access memory, or a non-transitory memory, such as at least one magnetic disk storage device, a flash memory device, or other non-transitory solid state storage devices. In some embodiments, optionally, the memory Y02 may include memories remote from the processor Y01, and such remote memories may be connected to the electronic device via a network. Examples of such a network include, but are not limited to, the Internet, intranets, blockchain networks, local area networks, mobile communication networks, and combinations thereof.

The electronic device may further include an input device Y03 and an output device Y04. The processor Y01, the memory Y02, the input device Y03 and the output device Y04 may be connected by a bus or other means, and Fig. 5 takes the connection by a bus as an example.

The input device Y03 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output device Y04 may include a display device, an auxiliary lighting device and a tactile feedback device (for example, a vibrating motor), or the like. The display device may include, but is not limited to, a liquid crystal display, a light emitting diode display, and a plasma display. In some implementations, the display device may be a touch screen.

Various implementations of the systems and technologies described here may be implemented in digital electronic circuitry, integrated circuitry, application specific integrated circuits, computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices) for providing machine instructions and/or data to a programmable processor, including a machine readable medium which receives machine instructions as a machine readable signal. The term "machine readable signal" refers to any signal for providing machine instructions and/or data to a programmable processor.

To provide interaction with a user, the systems and technologies described here may be implemented on a computer having: a display device (for example, a cathode ray tube or liquid crystal display monitor) for displaying information to a user; and a keyboard and a pointing device (for example, a mouse or a trackball) by which a user may provide input to the computer. Other kinds of devices may also be used to provide interaction with a user; for example, feedback provided to a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network, a wide area network, a blockchain network and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and VPS service.

It should be understood that various forms of the flows shown above may be used and reordered, and steps may be added or deleted. For example, the steps described in the present disclosure may be executed in parallel, sequentially, or in different orders, and are not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for generating a summary, comprising:
acquiring (101) a knowledge graph corresponding to a text to be processed, wherein nodes in the knowledge graph represent semantic concepts in the text to be processed, and sides in the knowledge graph represent semantic relationships among the semantic concepts;
encoding (102) the text to be processed at a token level to obtain a context encoded representation of each token;
determining (103) an initial representation of each node in the knowledge graph according to the context encoded representation of each token;
performing (104) an encoding operation according to the initial representation of each node and the connection relationships among the nodes to obtain a node representation of each node; and
performing (105) a decoding operation according to the node representation of each node to obtain the summary of the text to be processed.

2. The method of claim 1, wherein the text to be processed comprises N texts, N being a positive integer; and
the encoding the text to be processed at a token level comprises:
encoding the text to be processed at the token level using a pre-trained model.

3. The method of claim 1 or 2, wherein the determining (103) an initial representation of each node in the knowledge graph according to the context encoded representation of each token comprises:
if two or more tokens to be merged are acquired corresponding to a node, determining the initial representation of the node according to the context encoded representations of the two or more tokens to be merged; and
if only one token is acquired corresponding to a node, taking the context encoded representation of the semantic concept corresponding to the node as the initial representation of the node, and the semantic concept corresponding to the node is the one token.

4. The method of claim 3, wherein two or more tokens to be merged corresponding to a node are acquired by:
for a node having one token as its corresponding semantic concept, in response to determining that the token appears at at least two different positions in the text to be processed, taking the same tokens appearing at the different positions as the tokens to be merged corresponding to the node, and in response to determining that there is an another token having a different expression manner from but a same semantic as the token, taking as well the another token as a token to be merged corresponding to the node; and
for a node having one phrase as its corresponding semantic concept, taking tokens forming the phrase and appearing at various positions in the text to be processed as the tokens to be merged corresponding to the node, and in response to determining that there is an another token having a different expression manner from but a same semantic as the semantic concept corresponding to the node, taking as well the another token as a token to be merged corresponding to the node.

5. The method of claim 3 or 4, wherein the determining the initial representation of the node according to the context encoded representation of the two or more tokens to be merged comprises:
for a node, calculating the sum of the context encoded representations of the tokens to be merged corresponding to the node, and obtaining the quotient by dividing the sum by a number of the tokens to be merged corresponding to the node, and taking the quotient as the initial representation of the node.

6. The method of any one of claims 1 to 5, further comprising:
adding a shortcut side between a node and a second-order neighbor node of the node in the knowledge graph, wherein the second-order neighbor node of the node is connected to the node through another node; and
performing the encoding operation according to the initial representation of each node and the connection relationships among the nodes after the addition of the shortcut side, so as to obtain the node representation of each node.

7. The method of any one of claims 1 to 6, wherein the performing (105) a decoding operation according to the node representation of each node to obtain the summary of the text to be processed comprises:
performing the decoding operation according to the node representation of each node based on the graph-transfer attention mechanism, so as to obtain the summary of the text to be processed.

8. An apparatus (40) for generating a summary, comprising:
a graph parsing module (401) configured to acquire (101) a knowledge graph corresponding to a text to be processed, wherein nodes in the knowledge graph represent semantic concepts in the text to be processed, and sides in the knowledge graph represent semantic relationships among the semantic concepts;
a token encoding module (402) configured to encode (102) the text to be processed at a token level to obtain a context encoded representation of each token;
a merging module (403) configured to determine (103) an initial representation of each node in the knowledge graph according to the context encoded representation of each token;
a graph encoding module (404) configured to perform (104) an encoding operation according to the initial representation of each node and the connection relationships among the nodes to obtain a node representation of each node; and
a graph decoding module (405) configured to perform (105) a decoding operation according to the node representation of each node to obtain the summary of the text to be processed.

9. The apparatus (40) of claim 8, wherein the text to be processed comprises N texts, N being a positive integer; and
the token encoding module (402) encodes the text to be processed at the token level using a pre-trained model.

10. The apparatus (40) of claim 8 or 9, wherein if two or more tokens to be merged corresponding to a node are acquired, the merging module (403) determines the initial representation of the node according to the context encoded representations of the two or more tokens to be merged; and
if only one token is acquired corresponding to a node, the merging module (403) takes the context encoded representation of the semantic concept corresponding to the node as the initial representation of the node, and the semantic concept corresponding to the node is the one token.

11. The apparatus (40) of claim 10,
wherein for a node having one token as its corresponding semantic concept, in response to determining that the token appears at at least two different positions in the text to be processed, the merging module (403) takes the same tokens appearing at the different positions as the tokens to be merged corresponding to the node, and in response to determining that there is an another token which has a different expression manner from and a same semantics as the token, the merging module (403) takes as well the another token as a token to be merged corresponding to the node; and
for a node having one phrase as its corresponding semantic concept, the merging module (403) takes tokens forming the phrase and appearing at various positions in the text to be processed as the tokens to be merged corresponding to the node, and in response to determining that there is an another having a different expression manner from but a same semantic as the semantic concept corresponding to the node, the merging module (403) takes the another token as a token to be merged corresponding to the node.

12. The apparatus (40) of claim 10 or 11, wherein the merging module (403) calculates the sum of the context encoded representations of the tokens to be merged corresponding to a node, and obtains the quotient by dividing the sum and a number of the tokens to be merged corresponding to the node, and taking the quotient as the initial representation of the node.

13. The apparatus (40) of any one of claims 8 to 12, wherein the graph encoding module (404) is further configured to add a shortcut side between a node and a second-order neighbor node of the node in the knowledge graph, wherein the second-order neighbor node of the node is connected to the node through another node; and the graph encoding module (404) is further configured to perform the encoding operation according to the initial representation of each node and the connection relationships among the nodes after the addition of the shortcut side, so as to obtain the node representation of each node.

14. The apparatus (40) of any one of claims 8 to 13, wherein the graph decoding module (404) performs the decoding operation according to the node representation of each node based on the graph-transfer attention mechanism, so as to obtain the summary of the text to be processed.

15. An electronic device, comprising:
at least one processor (Y01); and
a memory (Y02) connected with the at least one processor (Y01) communicatively;
wherein the memory (Y02) stores instructions executable by the at least one processor (Y01) to cause the at least one processor (Y01) to perform the method according to any one of claims 1 to 7.

16. A non-transitory computer-readable storage medium comprising instructions, which, when executed by a computer, cause the computer to carry out the method according to any one of claims 1 to 7.

17. A computer program product comprising instructions which, when the program is executed by a computer, cause the computer to carry out the method according to any one of claims 1 to 7.
